# EUROPEAN PATENT APPLICATION

(11) **EP 3 979 268 A1**
(43) Date of publication of application: **06.04.2022**
(21) Application number: 21814212.3
(22) Date of filing: 25.04.2021
(51) Int. Cl.: H01F 5/04, F16K 31/06

(54) **SOLENOID VALVE COIL**

(30) Priority: 28.05.2020 CN 202010471142; 28.05.2020 CN 202020940383 U
(71) Applicant: Zhejiang Dunan Artificial Environment Co., Ltd., Shaoxing Zhejiang 311835 (CN)
(72) Inventor: HAN, Runhu, Shaoxing, Zhejiang 311835 (CN)
(74) Representative: Novagraaf Technologies
(86) International application number: PCT/CN2021/089714
(87) International publication number: WO 2021/238544

(57) **Abstract**

A solenoid valve coil, including: a solenoid valve coil body (10); and a lead wire assembly (20). The lead wire assembly (20) includes a connector (21) and a conducting wire (22), the connector (21) includes a wire hole (2121), an end portion of the conducting wire (22) extends into the wire hole (2121) and is electrically connected with the solenoid valve coil body (10), and the conducting wire (22) and an inlet of the wire hole (2121) are sealed. By means of the solenoid valve coil, a problem of poor sealing performance of the coil in the prior art is effectively solved.

## Description

### Cross-Reference to Related Application(s)

The present disclosure claims a priority of Chinese Application No. 202010471142.1, filed in the Chinese Patent Office on May 28, 2020, and entitled "Solenoid Valve Coil", and a priority of Chinese Application No. 202020940383.1, filed in the Chinese Patent Office on May 28, 2020, and entitled "Solenoid Valve Coil".

### Technical Field

The present disclosure relates to a field of solenoid valves, and in particular to a solenoid valve coil.

### Background

In a related art, a solenoid coil generally includes a coil and a junction box assembly electrically connected with the coil, the junction box assembly includes a housing and a junction box arranged in the housing, and a wire hole is provided on the housing. When a lead wire is connected to the solenoid coil, it is generally necessary to penetrate the lead wire into the wire hole, then connect the lead wire with a corresponding port of the junction box in the housing, and finally electrically connect the coil and the junction box assembly together.

For the above structure, external water easily enters the housing from a gap between the lead wire and the wire hole, thereby causing a short circuit fault, so that the solenoid coil cannot be used outdoors (with rain or snow) or some occasions that are prone to generating condensate water (refrigeration operation or heat pump operation).

### Summary

A main purpose of the present disclosure is to provide a solenoid valve coil, so as to solve a problem of poor sealing performance of the solenoid valve coil in the prior art.

In order to achieve the above purpose, according to one aspect of the present disclosure, a solenoid valve coil is provided, including: a solenoid valve coil body; and a lead wire assembly, which includes a connector and a conducting wire, wherein the connector includes a wire hole, an end portion of the conducting wire extends into the wire hole and is electrically connected with the solenoid valve coil body, and the conducting wire and an inlet of the wire hole are sealed.

Further, the connector includes a sealing surface that is in seal fit with the solenoid valve coil body, the sealing surface is provided with a mounting hole communicating with the wire hole, and a conducting piece is arranged in the mounting hole, such that the conducting wire is electrically connected with the solenoid valve coil body.

Further, the conducting piece includes a first plug-in unit and a second plug-in unit, which are plugged with each other, the first plug-in unit is electrically connected with the end portion of the conducting wire, and the second plug-in unit is electrically connected with a coil in the solenoid valve coil body.

Further, the connector is injection molded on a circumferential outer side of the conducting wire, or, the conducting wire and the inlet of the wire hole are sealed by glue filling.

Further, the connector includes a junction box and a junction box housing, the junction box housing is provided with the wire hole and an accommodating groove communicating with the wire hole, the junction box is arranged in the accommodating groove, the mounting hole is arranged on the junction box, and an end face of the junction box housing provided with the accommodating groove and an outer end face of the junction box form the sealing surface.

Further, the junction box housing is injection molded on a circumferential outer side of the conducting wire and the junction box, or, the junction box is plugged into the junction box housing, and the conducting wire and the inlet of the wire hole on the junction box housing are sealed by glue filling.

Further, the conducting wire includes an electric wire and a wire sleeve surrounding a circumferential outer side of the electric wire, a portion of the connector connected with the wire sleeve is a transition portion, wherein an outer surface of the transition portion gradually shrinks inward in a direction from the solenoid valve coil body to the lead wire assembly, or, an outer surface of the transition portion is provided with a concave-convex structure.

Further, a sealing member is arranged between the sealing surface of the connector and the solenoid valve coil body, and the sealing member is located on a circumferential outer side of the conducting piece.

Further, the sealing member is a sealing ring, or, the sealing member is a sealing sheet, and the sealing sheet is provided with an avoidance hole for avoiding the conducting piece.

Further, the sealing member includes a body portion and a waterproof rib, wherein the waterproof rib is arranged on an end face of the body portion facing the solenoid valve coil body, and/or, the waterproof rib is arranged on an end face of the body portion facing the lead wire assembly.

Further, the solenoid valve coil body and the connector are connected by a fastener.

By applying a technical solution of the present disclosure, the connector and the conducting wire are connected in a sealed manner, so that water will not enter the connector from a gap between the connector and the conducting wire, thereby avoiding a short circuit of the lead wire assembly, and thus the solenoid valve coil can be applied to occasions with rainfall or occasions that are prone to generating condensate water. On the other hand, the sealed connection between the connector and the conducting wire also isolates electric devices inside the lead wire assembly from the outside, so no electric spark is released to the outside of the lead wire assembly, and even if there is an ignition condition in an external environment due to a leakage of combustibles, the solenoid valve coil will not cause fire or explosion, thereby meeting explosion-proof requirements.

### Brief Description of the Drawings

Drawings constituting a part of the present disclosure are used for provide a further understanding of the present disclosure. Illustrative embodiments of the present disclosure and descriptions thereof are used for explaining the present disclosure, but do not constitute improper limitations of the present disclosure. In the drawings:
Fig. 1 shows a schematic diagram of a longitudinal section structure of a first embodiment of a solenoid valve coil according to the present disclosure;
Fig. 2 shows an exploded view of the solenoid valve coil of Fig. 1;
Fig. 3 shows a schematic diagram of a three-dimensional structure of the solenoid valve coil of Fig. 1 in which a conducting wire cooperates with a first plug-in unit;
Fig. 4 shows a schematic diagram of a three-dimensional structure of a second embodiment of the solenoid valve coil according to the present disclosure;
Fig. 5 shows a schematic diagram of a longitudinal section structure of the solenoid valve coil of Fig. 4;
Fig. 6 shows an exploded view of a third embodiment of the solenoid valve coil according to the present disclosure; and
Fig. 7 shows a schematic diagram of a longitudinal section structure of the solenoid valve coil of Fig. 6.

The above drawings include following reference signs:
10. solenoid valve coil body; 11. coil; 20. lead wire assembly; 21. connector; 211. junction box; 2111. mounting hole; 212. junction box housing; 2121. wire hole; 2122. accommodating groove; 213. sealing surface; 214. conducting piece; 2141. first plug-in unit; 2142. second plug-in unit; 215. transition portion; 22. conducting wire; 221. electric wire; 222. wire sleeve; 30. sealing member; 31. avoidance hole; 32. body portion; 33. waterproof rib; and 40. fastener.

### Detailed Description of the Embodiments

It should be noted that embodiments in the present disclosure and features in the embodiments can be combined with each other if there is no conflict. Hereinafter, the present disclosure will be described in detail with reference to the drawings and in conjunction with the embodiments.

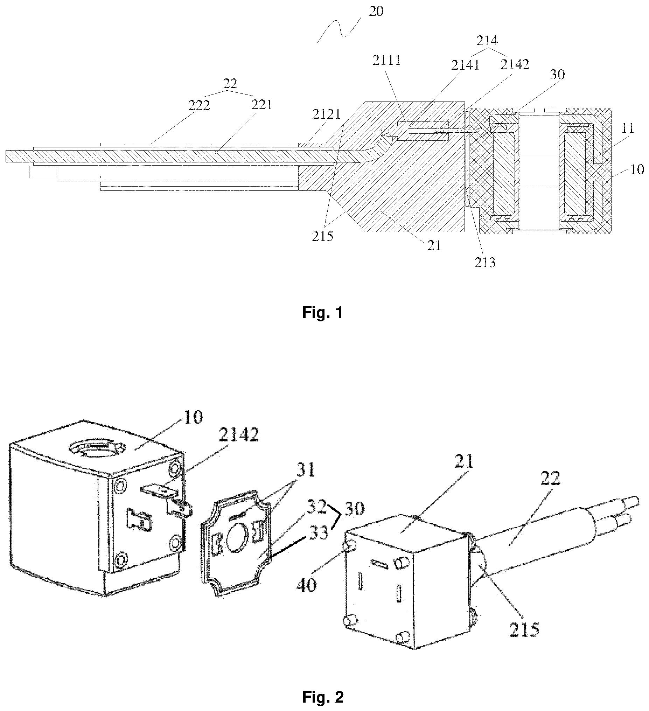

As shown in Fig. 1 to Fig. 3, a solenoid valve coil in a first embodiment includes: a solenoid valve coil body 10 and a lead wire assembly 20, wherein the lead wire assembly 20 includes a connector 21 and a conducting wire 22, the connector 21 includes a wire hole 2121, an end portion of the conducting wire 22 extends into the wire hole 2121 and is electrically connected with the solenoid valve coil body 10, and the conducting wire 22 and an inlet of the wire hole 2121 are sealed.

By applying a technical solution of the first embodiment, the connector 21 and the conducting wire 22 are connected in a sealed manner, so that water will not enter the connector 21 from a gap between the connector and the conducting wire, thereby improving a sealing performance of the solenoid valve coil, and avoiding a short circuit of the lead wire assembly 20, thus the solenoid valve coil can be applied to occasions with rainfall or occasions that are prone to generating condensate water.

As shown in Fig. 1, in the first embodiment, the connector 21 includes a sealing surface 213 that is in seal fit with the solenoid valve coil body 10, the sealing surface 213 is provided with a mounting hole 2111 communicating with the wire hole 2121, and a conducting piece 214 is arranged in the mounting hole 2111, such that the conducting wire 22 is electrically connected with the solenoid valve coil body 10. In an above structure, the connector 21 and the solenoid valve coil body 10 are sealed, which prevents water from entering into the solenoid valve coil from a gap between the solenoid valve coil body 10 and the lead wire assembly 20, and also prevents electric sparks from being released to an outside of the solenoid valve coil from a space between the solenoid valve coil body 10 and the lead wire assembly 20, thereby further ensuring a safety of the solenoid valve coil.

As shown in Fig. 1 to Fig. 3, in the first embodiment, the conducting piece 214 includes a first plug-in unit 2141 and a second plug-in unit 2142, which are plugged with each other, the first plug-in unit 2141 is electrically connected with the end portion of the conducting wire 22, and the second plug-in unit 2142 is electrically connected with a coil 11 in the solenoid valve coil body 10. The solenoid valve coil body 10 and the lead wire assembly 20 are semi-finished products, when assembling the solenoid valve coil, a user only needs to connect the solenoid valve coil body 10 and the lead wire assembly 20 in a plugging-in manner, so as to complete the assembly of the solenoid valve coil, and the user does not need to mount the lead wire assembly 20 by himself, therefore assembly steps are reduced, and labor costs are reduced. The above structure is simple and convenient to assembly the solenoid valve coil.

It should be noted that, the conducting piece 214 can be a flaky wiring terminal or other shapes such as a binding post, a wiring pin and a USB interface. In some embodiments, the first plug-in unit 2141 is a plug-in sheet that is arranged inside the lead wire assembly 20 and is provided with a groove, and the second plug-in unit 2142 is a plug-in sheet protruding from the solenoid valve coil body 10. Of course, in other embodiments not shown in the figure, it is also possible that the first plug-in unit is a plug-in sheet protruding from the lead wire assembly, and the second plug-in unit is a plug-in sheet that is arranged inside the solenoid valve coil body and is provided with a groove.

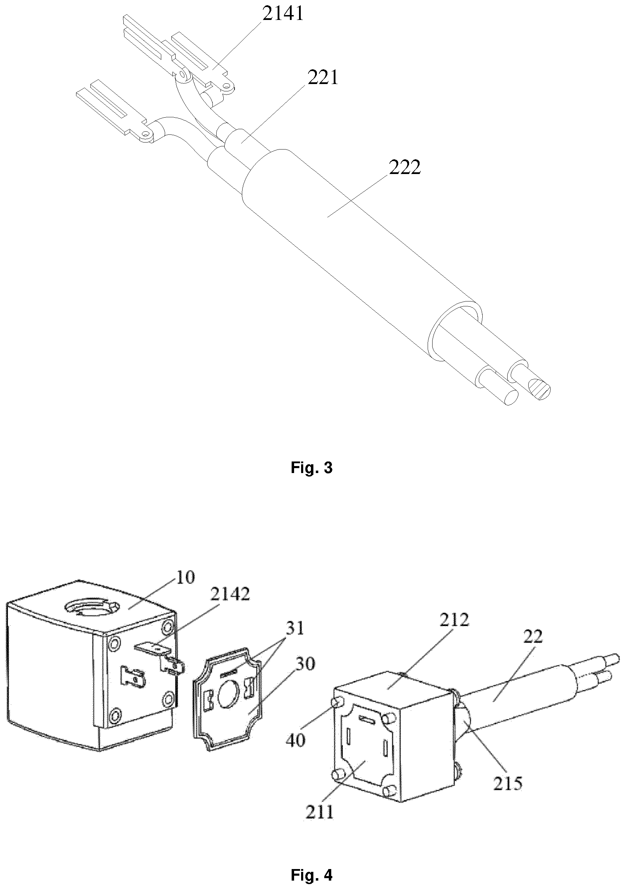

It should be noted that, in some embodiments, as shown in Fig. 3, the first plug-in unit 2141 is provided with a through hole, the conducting wire 22 is wound on a hole wall of the through hole of the first plug-in unit 2141, or a screw is installed in the through hole, so that the screw clamps the conducting wire 22. In some embodiments, the conducting wire and the first plug-in unit can also be connected by welding.

As shown in Fig. 1, in the first embodiment, the connector 21 is injection molded on a circumferential outer side of the conducting wire 22. In the above structure, the connector 21 and the conducting wire 22 are hermetically connected by injection molding, so that the connector 21 is formed as a whole, and accordingly, the conducting wire 22 and the connector 21 are completely sealed. In addition, the first plug-in unit 2141 inside the connector 21 is wrapped and cannot move, so that a connection between the first plug-in unit 2141 and the conducting wire 22 is stable, and no electric spark is generated. Of course, in other embodiments not shown in the figure, the conducting wire 22 and the inlet of the wire hole 2121 are sealed by glue filling.

As shown in Fig. 1 and Fig. 3, in the first embodiment, the conducting wire 22 includes an electric wire 221 and a wire sleeve 222 surrounding a circumferential outer side of the electric wire 221, a portion of the connector 21 connected with the wire sleeve 222 is a transition portion 215, wherein an outer surface of the transition portion 215 gradually shrinks inward in a direction from the solenoid valve coil body 10 to the lead wire assembly 20. The above structure enhances a strength of a joint between the conducting wire and the connector 21 and delay a breakage of the conducting wire 22. Of course, in other embodiments not shown in the figure, the transition portion is provided with a concave-convex structure or a thread structure.

As shown in Fig. 1 to Fig. 3, in the first embodiment, a sealing member 30 is arranged between the sealing surface 213 of the connector 21 and the solenoid valve coil body 10, and the sealing member 30 is located on a circumferential outer side of the conducting piece 214. In the above structure, the sealing member 30 enhances a sealing performance between the connector 21 and the solenoid valve coil body 10.

Specifically, as shown in Fig. 2, in the first embodiment, the sealing member 30 is a sealing sheet, and the sealing sheet is provided with an avoidance hole 31 for avoiding the conducting piece 214. In the above structure, a shape of the sealing sheet is adapted to that of the sealing surface 213, so that a sealing area between the connector 21 and the solenoid valve coil body 10 is increased. Of course, in other embodiments not shown in the figure, the sealing member 30 is a sealing ring.

As shown in Fig. 2, in the first embodiment, the solenoid valve coil body 10 and the connector 21 are connected by a fastener 40. In the above structure, the fastener 40 passes through the connector 21 and the sealing member 30 in sequence, and is fastened to the solenoid valve coil body 10, so that the solenoid valve coil body 10 and the connector 21 are sealed more tightly. In some embodiments, the fastener 40 is a fastening screw, and four fastening screws are provided.

As shown in Fig. 2, in the first embodiment, the sealing member 30 includes a body portion 32 and a waterproof rib 33, wherein the waterproof rib 33 is arranged on an end face of the body portion 32 facing the solenoid valve coil body 10, and is arranged on an end face of the body portion 32 facing the lead wire assembly 20. Specifically, the waterproof rib 33 is arranged on a circumferential outer side of the avoidance hole 31 in a surrounding manner. By means of the above structure, when external water flows to the avoidance hole 31, the waterproof rib 33 blocks the external water, thereby further improving the sealing performance and ensuring a service life of the lead wire assembly 20. Of course, in other embodiments not shown in the figure, the waterproof rib 33 is arranged only on the end face of the body portion 32 facing the solenoid valve coil body 10, or only on the end face of the body portion 32 facing the lead wire assembly 20.

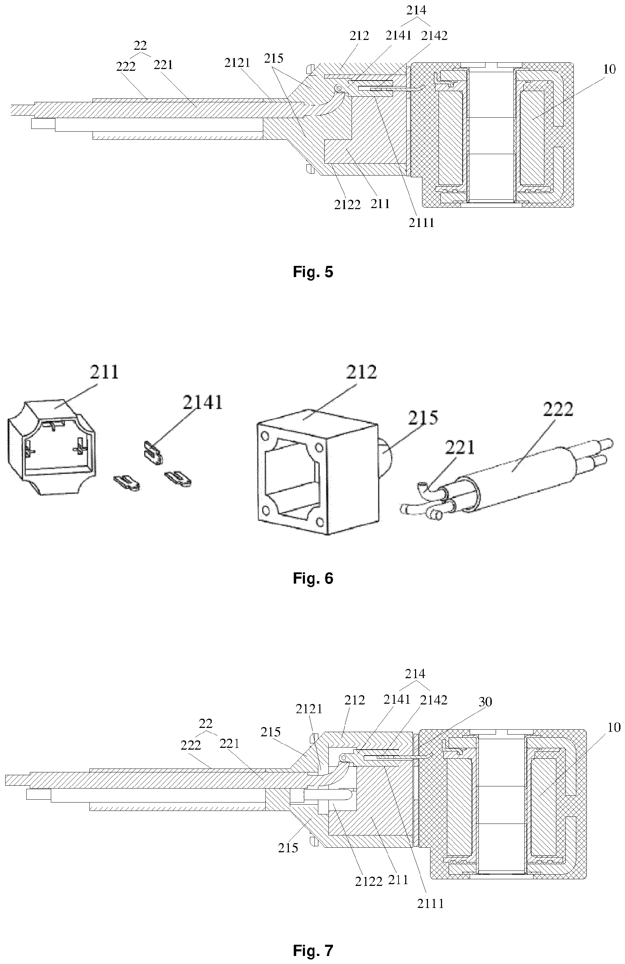

As shown in Fig. 4 and Fig. 5, a difference between the solenoid valve coil in a second embodiment and the solenoid valve coil in the first embodiment lies in a structure of the connector 21. Specifically, in the second embodiment, the connector 21 includes a junction box 211 and a junction box housing 212, the junction box housing 212 is provided with the wire hole 2121 and an accommodating groove 2122 communicating with the wire hole 2121, the junction box 211 is arranged in the accommodating groove 2122, a mounting hole 2111 is arranged on the junction box 211, and an end face of the junction box housing 212 provided with the accommodating groove 2122 and an outer end face of the junction box 211 form the sealing surface 213. The above structure facilitates a processing of the connector 21.

In some embodiments, as shown in Fig. 4 and Fig. 5, the junction box housing 212 is injection molded on the circumferential outer side of the conducting wire 22 and the junction box 211. The above structure realizes a sealing between the junction box housing 212 and the conducting wire 22 by injection molding the junction box housing 212. In addition, the junction box 211 is a pre-processed injection molded part, and only the junction box housing 212 is injection molded during processing, such that a production rate of the connector 21 is improved.

As shown in Fig. 6 and Fig. 7, a difference between the solenoid valve coil in a third embodiment and the solenoid valve coil in the second embodiment lies in a sealing manner. Specifically, in the third embodiment, the junction box 211 is plugged into the junction box housing 212, and the conducting wire 22 and the inlet of the wire hole 2121 on the junction box housing 212 are sealed by glue filling. In the above structure, the junction box 211 and the junction box housing 212 are both pre-processed injection molded parts, during processing, the conducting wire 22 is connected with the junction box 211, then the junction box 211 is plugged into the accommodating groove 2122 to complete an assembly of the connector, and finally, glue is filled in the wire hole 2121 between the junction box housing 212 and the conducting wire 22 for sealing. The above structure further improves the production rate of the connector 21.

The foregoing descriptions are only some embodiments of the present disclosure and are not intended to limit the present disclosure. For those skilled in the art, the present disclosure can have various modifications and changes. Any modifications, equivalent replacements, improvements and the like, made within the spirit and principle of the present disclosure, should all be included in the protection scope of the present disclosure.

## Claims

1. A solenoid valve coil, comprising:
a solenoid valve coil body (10); and
a lead wire assembly (20), which comprises a connector (21) and a conducting wire (22), wherein the connector (21) comprises a wire hole (2121), an end portion of the conducting wire (22) extends into the wire hole (2121) and is electrically connected with the solenoid valve coil body (10), and the conducting wire (22) and an inlet of the wire hole (2121) are sealed.

2. The solenoid valve coil as claimed in claim 1, wherein the connector (21) comprises a sealing surface (213) that is in seal fit with the solenoid valve coil body (10), the sealing surface (213) is provided with a mounting hole (2111) communicating with the wire hole (2121), and a conducting piece (214) is arranged in the mounting hole (2111), such that the conducting wire (22) is electrically connected with the solenoid valve coil body (10).

3. The solenoid valve coil as claimed in claim 2, wherein the conducting piece (214) comprises a first plug-in unit (2141) and a second plug-in unit (2142), which are plugged with each other, wherein the first plug-in unit (2141) is electrically connected with the end portion of the conducting wire (22), and the second plug-in unit (2142) is electrically connected with a coil (11) in the solenoid valve coil body (10).

4. The solenoid valve coil as claimed in any one of claims 1-3, wherein the connector (21) is injection molded on a circumferential outer side of the conducting wire (22), or, the conducting wire (22) and the inlet of the wire hole (2121) are sealed by glue filling.

5. The solenoid valve coil as claimed in claim 2 or 3, wherein the connector (21) comprises a junction box (211) and a junction box housing (212), wherein the junction box housing (212) is provided with the wire hole (2121) and an accommodating groove (2122) communicating with the wire hole (2121), the junction box (211) is arranged in the accommodating groove (2122), the mounting hole (2111) is arranged on the junction box (211), and an end face of the junction box housing (212) provided with the accommodating groove (2122) and an outer end face of the junction box (211) form the sealing surface (213).

6. The solenoid valve coil as claimed in claim 5, wherein the junction box housing (212) is injection molded on a circumferential outer side of the conducting wire (22) and the junction box (21), or, the junction box (211) is plugged into the junction box housing (212), and the conducting wire (22) and the inlet of the wire hole (2121) on the junction box housing (212) are sealed by glue filling.

7. The solenoid valve coil as claimed in claim 1, wherein the conducting wire (22) comprises an electric wire (221) and a wire sleeve (222) surrounding a circumferential outer side of the electric wire (221), a portion of the connector (21) connected with the wire sleeve (222) is a transition portion (215), wherein an outer surface of the transition portion (215) gradually shrinks inward in a direction from the solenoid valve coil body (10) to the lead wire assembly (20), or, an outer surface of the transition portion (215) is provided with a concave-convex structure.

8. The solenoid valve coil as claimed in claim 2, wherein a sealing member (30) is arranged between the sealing surface (213) of the connector (21) and the solenoid valve coil body (10), and the sealing piece (30) is located on a circumferential outer side of the conducting piece (214).

9. The solenoid valve coil as claimed in claim 8, wherein the sealing member (30) is a sealing ring, or, the sealing member (30) is a sealing sheet, and the sealing sheet is provided with an avoidance hole (31) for avoiding the conducting piece (214).

10. The solenoid valve coil as claimed in claim 8, wherein the sealing member (30) comprises a body portion (32) and a waterproof rib (33), wherein the waterproof rib (33) is arranged on an end face of the body portion (32) facing the solenoid valve coil body (10), and/or, the waterproof rib (33) is arranged on an end face of the body portion (32) facing the lead wire assembly (20).

11. The solenoid valve coil as claimed in claim 1, wherein the solenoid valve coil body (10) and the connector (21) are connected by a fastener (40).
